(19) **Europäisches Patentamt / European Patent Office / Office européen des brevets**

(11) **EP 4 349 484 A1**

(12) # EUROPEAN PATENT APPLICATION
published in accordance with Art. 153(4) EPC

(43) Date of publication:
**10.04.2024 Bulletin 2024/15**

(21) Application number: **21944291.0**

(22) Date of filing: **21.07.2021**

(51) International Patent Classification (IPC):
**B01J 37/10** (2006.01)      **B01J 35/10** (2006.01)
**B01J 29/76** (2006.01)      **C01B 3/40** (2006.01)

(52) Cooperative Patent Classification (CPC):
**B01J 29/76; B01J 35/60; B01J 37/10; C01B 3/40;**
**Y02P 20/52**

(86) International application number:
**PCT/KR2021/009424**

(87) International publication number:
**WO 2022/255536 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2021 KR 20210069791**

(71) Applicant: **LOTTE CHEMICAL CORPORATION**
**Seoul 05551 (KR)**

(72) Inventors:
• **SHIN, Chae-Ho**
  **Cheongju-si Chungcheongbuk-do 28180 (KR)**
• **PARK, Min Bum**
  **Incheon 22001 (KR)**
• **KIM, Young Woo**
  **Cheongju-si Chungcheongbuk-do 28124 (KR)**
• **KWEON, Sungjoon**
  **Incheon 22185 (KR)**

(74) Representative: **Germain Maureau**
**12, rue Boileau**
**69006 Lyon (FR)**

(54) **METHOD FOR PRODUCING TWO-DIMENSIONAL NICKEL SILICATE MOLECULAR SIEVE CATALYST FOR DRY REFORMING OF METHANE AND TWO-DIMENSIONAL NICKEL SILICATE MOLECULAR SIEVE CATALYST FOR DRY REFORMING OF METHANE PRODUCED BY SAME METHOD**

(57)   The present invention relates to a method for producing a two-dimensional nickel silicate molecular sieve catalyst for dry reforming of methane, wherein a catalyst containing a two-dimensional wide external surface area and nickel bonded to the surface area and having structural stability and activity is produced through hydrothermal treatment in one step.

[FIG. 3]

EP 4 349 484 A1

**Description**

[Technical Field]

The present invention relates to a method of preparing a nickel silicate molecular sieve catalyst for dry reforming of methane (DRM), and more particularly, to a method of preparing a two-dimensional nickel silicate molecular sieve catalyst for DRM, wherein the catalyst, which has a large two-dimensional external surface area and nickel bonded to the surface area, and has structural stability and activity, is prepared through one-step hydrothermal treatment.

[Background Art]

Dry reforming of methane (DRM) is a reaction (Reaction Scheme 1) that converts two greenhouse gases, $CH_4$ and $CO_2$, to syngas (a mixture of $H_2$ and CO). Since the DRM reaction is one of the core technologies of building a circular carbon economy, which recycles $CO_2$ into value-added chemicals such as synthetic fuels, methanol, and dimethyl ether to reduce carbon emissions, DRM is attracting attention from environmental and industrial sectors.

<Reaction Scheme 1>        $CH_4 + CO_2 \rightarrow 2CO + 2H_2$ $\Delta H°_{298}$ = 247 kJ/mol$^{-1}$

However, despite the great impact on the environment and industry, it is difficult to successfully commercialize DRM due to its complicated mechanism and endothermic nature. Indeed, in DRM, carbon deposits are generated due to the Boudouard reaction ($2CO \leftrightarrow C + CO_2$, $\Delta H°_{298}$ = -190 kJmol$^{-1}$) and methane cracking ($CH_4 \rightarrow C + 2H_2$, $\Delta H°_{298}$ = 75 kJmol$^{-1}$), and a side reaction such as the reverse water-gas shift reaction (RWGS, $CO_2 + H_2 \rightarrow CO + H_2O$, $\Delta H°_{298}$ = 41 kJmol$^{-1}$), which reduces the $H_2$/CO ratio of syngas, is involved.

Therefore, it is necessary to develop a highly active and stable catalyst for the successful commercialization of DRM.

Many studies on the possibility of using various transition metals as a catalyst in DRM have been conducted, and especially, catalysts in Group VIII, including platinum (Pt), ruthenium (Ru), rhodium (Rh), palladium (Pd), nickel (Ni), and cobalt (Co) are being developed. Among them, Pt, Ru, Rh, and Pd have good catalytic activity, selectivity, and stability as noble metals but have low economic efficiency when used for industrial purposes because of their high prices.

Therefore, studies on transition metals, which are cheaper than noble metals, such as tungsten (W), titanium (Ti), vanadium (V), nickel (Ni), iron (Fe), copper (Cu), molybdenum (Mo), and cobalt (Co), have been conducted to use as a catalyst for DRM.

Among these transition metals, since Ni is relatively cheaper than other transition metals and has relatively high selectivity and a relatively high conversion rate in $CO_2$ reforming of methane, Ni is widely used as a catalyst for DRM.

However, when Ni is used as a catalyst, it is difficult to keep catalytic activity for a long time because of deactivation of the catalyst caused by coke deposition and sintering of the active metal in DRM.

Therefore, a catalyst support has been studied extensively to compensate for the above shortcoming of the active Ni metal. This is because catalytic activity and stability of a catalyst can vary significantly depending on not only the type and size of active metals, but also the type and surface area of supports on which the active metal is supported, and their metal-support interaction. Alumina is commonly used as a catalyst support.

Korean Patent Publication No. 10-1959379 (published March 18, 2019) relates to a nickel-based catalyst for the combined reforming of methane and discloses that active metals, nickel (Ni), antimony (Sb), and molybdenum (Mo), are supported on a gamma alumina support. However, when the gamma alumina support is used, it is difficult to improve catalytic activity because dispersion of these active metals is not easy, and the external surface area in contact with a reactant is not large enough.

In addition, Korean Patent Publication No. 10-1487387 (published January 28, 2015) relates to a method of preparing a metal carbide-based methane reforming catalyst and discloses that catalytic activity can be improved by increasing the specific surface area by including a porous carbon material support and active ingredients such as Ni and Mo precursors. However, the preparation method of this related art document may cause a decrease in catalytic activity due to Ni agglomeration or formation of Ni clusters.

Therefore, in order to solve problems in DRM such as a decrease in catalytic activity caused by coke deposition and a reduction of active surface area of Ni due to sintering while including Ni as an active metal, it is necessary to develop a new type of catalyst for DRM and a method of preparing the catalyst, which can improve structural stability and catalytic activity and increase a catalyst lifetime through changing the support, Ni-support interaction, and catalyst framework.

[Disclosure]

[Technical Problem]

The present invention is directed to providing a method of preparing a two-dimensional nickel silicate molecular sieve catalyst for dry reforming of methane (DRM), and the method simplifies a process for preparing a catalyst through one-step hydrothermal treatment and improves the structural stability and catalytic activity of a catalyst by enabling the catalyst to have a large two-dimensional external surface area and nickel bonded to the surface area through the one-step hydrothermal treatment.

In addition, the present invention is directed to providing a two-dimensional nickel silicate molecular sieve catalyst for DRM, prepared by the method.

[Technical Solution]

One aspect of the present invention provides a method of preparing a two-dimensional nickel silicate molecular sieve catalyst for dry reforming of methane (DRM), which includes: (a) synthesizing a layered borosilicate zeolite precursor having an MWW framework [B-MWW(P)]; and (b) adding a nickel precursor to the B-MWW(P) and performing hydrothermal treatment.

In one example, step (a) may include synthesizing a B-MWW(P) having an Si/B molar ratio of 5.0 to 20.0.

In one example, a concentration of the nickel precursor in step (b) may be 0.1 to 5.0 M.

In one example, a hydrothermal treatment temperature in step (b) may be 100 to 200 °C.

Another aspect of the present invention provides a two-dimensional nickel silicate molecular sieve catalyst for DRM, prepared by the method described above.

In one example, a Si/Ni molar ratio of the catalyst may be 1.5 to 30.

In one example, the catalyst may have a catalyst deactivation rate of less than 5% for methane and carbon dioxide in DRM at 700 °C.

[Advantageous Effects]

The present invention can prepare a two-dimensional nickel silicate molecular sieve catalyst by substituting boron with nickel through one-step hydrothermal treatment of a B-MWW(P) and a nickel precursor and delaminating a three-dimensional layered MWW zeolite, and therefore, process efficiency can be improved.

In the present invention, boron of a B-MWW(P) is substituted with nickel during the hydrothermal treatment, so nickel, as an active metal, can be bonded to a specific location of the MWW zeolite, and as the three-dimensional layered MWW zeolite is delaminated to form a two-dimensional framework with nickel being exposed to the outside, an external surface area, where the active nickel is bonded, is increased so that catalytic activity can be significantly increased.

The present invention relates to a nickel silicate molecular sieve for dry reforming of methane (DRM) and a method of preparing the same. The present invention can improve the stability and activity of a catalyst by using nickel as an active metal to lower catalyst expenses and transforming a 3D zeolite into a 2D molecular sieve to increase an external surface area and bonding a large amount of active metal to a support.

[Description of Drawings]

FIG. 1 is a schematic diagram of a method of preparing a nickel silicate molecular sieve catalyst and dry reforming of methane (DRM) according to an example of the present invention.

FIG. 2 illustrates (A) nitrogen content measured using ICP elemental analysis, (B) $N_2$ adsorption isotherms, and (C) BET surface area according to examples of the present invention.

FIG. 3 illustrates (A) $CH_4$ conversion, (B) $CO_2$ conversion, and (C) $H_2/CO$ ratios of Examples 1 to 4 and Comparative Examples 1 and 2 in DRM at 700 °C, and (D) $CH_4$ conversion, (E) $CO_2$ conversion, and (F) $H_2/CO$ ratios of Examples 1 to 4 and Comparative Examples 1 and 2 in DRM at 750 °C, and (G) a $CH_4$ conversion, a $CO_2$ conversion, and an $H_2/CO$ ratio and (H) Raman spectra of Example 3 for 10-day use, 12-hour use, and the fresh in DRM at 750 °C, according an example of the present invention.

FIG. 4 illustrates (A) $CH_4$ conversion, (B) $CO_2$ conversion, and (C) $H_2/CO$ ratios of Examples 4 to 7 according to a hydrothermal treatment time in DRM at 750 °C, and (D) $CH_4$ conversion, (E) $CO_2$ conversion, and (F) $H_2/CO$ ratios of Examples 4, 8, and 9 (Ni-DML-160-4-Z) according to a concentration of nickel precursor in DRM at 750 °C, according to an example of the present invention.

[Modes of the Invention]

Unless otherwise specified, all technical and scientific terms used herein have the same meaning as they are commonly understood by those skilled in the art. Generally, the nomenclature used herein is well known and commonly used in the art.

In this specification, when a part "includes" a certain component, it means that a part may further include other components rather than excluding other components, unless specifically stated to the contrary.

Hereinafter, the present invention will be described in detail.

In one aspect, the present invention provides a method of preparing a two-dimensional nickel silicate molecular sieve catalyst for dry reforming of methane (DRM), which includes: (a) synthesizing a layered borosilicate zeolite precursor having an MWW framework [B-MWW(P)]; and (b) adding a nickel precursor to the B-MWW(P) and performing hydrothermal treatment.

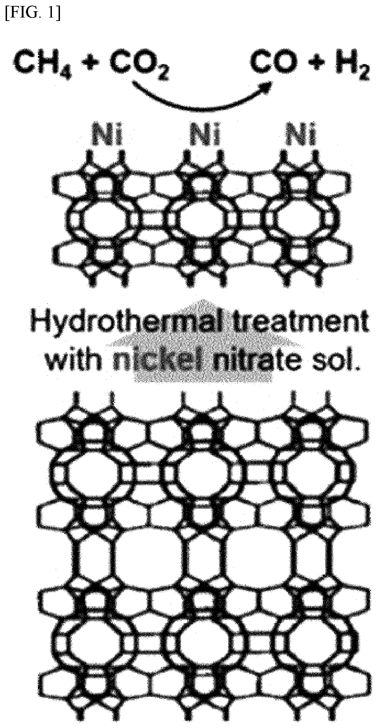

FIG. 1 is a schematic diagram of a method of preparing a two-dimensional nickel silicate molecular sieve catalyst for dry reforming of methane (DRM) according to the present invention, and the present invention will be described in detail with reference to the schematic diagram.

In the present invention, step (a) is a step of (a) synthesizing a layered borosilicate zeolite precursor having an MWW framework [B-MWW(P)].

The MWW is one of the zeolite framework topologies, which has a lamellar structure, and is a three-dimensional zeolite including two independent pore systems composed of a pore system of two-dimensional sinusoidal 10-membered ring (10-MR) channels with an elliptical ring cross-section of 4.1 Å×5.1 Å and a pore system including a 12-MR supercage connected to 10-MR windows.

In step (a), a layered borosilicate zeolite precursor having an MWW framework B-MWW(P), which having a structural specificity, is synthesized by including boron into a framework of a three-dimensional MWW zeolite, wherein boron is bonded in the MWW framework in a form of Si-O-B, and an Si/B molar ratio may be 5.0 to 20.0, preferably 10 to 15. When the Si/B molar ratio is less than 5, Si content is relatively insufficient as an excess amount of B is included in the B-MWW(P), which may make it difficult to form a three-dimensional MWW zeolite. When the Si/B molar ratio is greater than 20, a relative amount of B compared to Si is reduced in the B-MWW(P), and sites that can be substituted with nickel are reduced during hydrothermal treatment, which may cause a decrease in catalytic activity.

For example, in step (a), an organic structure-directing agent (SDA) may be used to synthesize a layered B-MWW(P), and a three-dimensional MWW zeolite may be formed through removal of the organic SDA by calcination and condensation during the synthesis process, but step (a) is not limited thereto and any commonly known method may be used for the synthesis, so a detailed description thereof is omitted herein.

In the present invention, step (b) is a step of performing hydrothermal treatment by adding an aqueous acidic nickel precursor solution of pH 4.0 or less to the B-MWW(P). Specifically, in step (b), an aqueous acidic nickel precursor solution is added to the synthesized B-MWW(P), and the mixture solution is hydrothermally treated at 100 to 200 °C. Therefore, the B-MWW(P) is delaminated under one-step while boron is substituted with nickel to prepare a two-dimensional multilayered nickel silicate molecular sieve.

An amount of the aqueous nickel precursor solution may be adjusted according to a hydrothermal treatment temperature, and the aqueous nickel precursor solution may have a concentration of 0.1 to 5.0 M. When the concentration of the aqueous nickel precursor solution is less than 0.1 M, an increase in pH of the aqueous pretreatment solution causes a decrease in boron release and delamination of the MWW framework, and substitution of nickel becomes difficult. When the concentration of the aqueous nickel precursor solution exceeds 5.0 M, the MWW framework may collapse due to excessively low pH.

The aqueous nickel precursor solution includes an acid component, preferable nitric acid, and has a pH of 4.0 or lower. Under this condition, boron is removed from the B-MWW(P) and is substituted with nickel by the acidic nickel precursor solution during hydrothermal treatment in step (b), and during the process, the MWW zeolite is delaminated as interlayer bonds are broken, and the three-dimensional B-MWW may be transformed into a two-dimensional nickel silicate molecular sieve.

A temperature during the hydrothermal treatment is 100 to 200 °C. When the temperature is lower than 100 °C, the three-dimensional B-MWW(P) may not be sufficiently delaminated, and the substitution of nickel is reduced at sites where deboronation occurs, which may make it difficult to form a two-dimensional nickel silicate molecular sieve. In addition, while the number of defect sites in the molecular sieve is increased, an amount of nickel bonded to the framework is reduced, and therefore, the number of catalytically active sites may be reduced. On the other hand, when the temperature is higher than 200 °C, an amount of nickel clusters formed by agglomeration of the nickel precursor increases rather than that of nickel bonded to the delaminated MWW zeolite due to the high temperature, and therefore, it may be difficult to obtain a uniform composition. Therefore, the hydrothermal treatment may be performed at 100 to 200 °C, preferably at 140 to 160 °C.

The hydrothermal treatment time is not limited as the hydrothermal treatment time may be adjusted according to a processing speed and reaction environment, and for example, may be 1 to 4 days.

After step (b), filtration, drying, and sintering may be further included. As these processes may be carried out according to commonly known methods in the art, a detailed description will be omitted herein, and through the calcination step, an occluded organic structure-directing agent in the framework may be removed from the two-dimensional nickel silicate molecular sieve.

According to the preparation method of the present invention, boron is substituted with nickel in the MWW framework, and an Si-O-Ni bond may be formed in the MWW framework, and therefore, controlling nickel bonding sites may become easy and an interaction with a zeolite may be improved. In particular, as the three-dimensional layered MWW zeolite is delaminated to form a two-dimensional framework with nickel being exposed to the outside, an external surface area, where the active nickel is bonded, is increased so that catalytic activity may be significantly increased.

Therefore, a two-dimensional nickel silicate molecular sieve catalyst for dry reforming of methane (DRM) prepared according to the preparation method exhibits improved reactivity in DRM, that is, improved $CH_4$ and $CO_2$ conversion, depending on framework properties and nickel content.

Specifically, a Si/B molar ratio of the two-dimensional nickel silicate molecular sieve catalyst may be 11 to 130, and an Si/Ni molar ratio thereof may be 1.5 to 30. The two-dimensional nickel silicate molecular sieve catalyst may include not only Si and Ni, but also B in the framework, but when a relative amount of B in the Si/B molar ratio is less than 11, active Ni is not sufficient to replace B in the two-dimensional nickel silicate molecular sieve, which may cause a decrease in catalytic activity.

On the other hand, when a relative amount of Ni in the Si/Ni molar ratio of the two-dimensional nickel silicate molecular sieve catalyst framework is less than 1.5, an excess amount of Ni is included in the molecular sieve catalyst, and not only an Si-O-Ni bond, but also a nickel cluster is formed in the molecular sieve or on a surface of the molecular sieve, which may cause a decrease in catalytic activity. When a relative amount of Ni exceeds 30, active Ni content in the molecular sieve is insufficient, which may cause a decrease in catalytic activity.

Therefore, the two-dimensional nickel silicate molecular sieve catalyst has Si and Ni in the framework, and the Si/Ni molar ratio may be 1.5 to 30, preferably 4 to 25, and the Si/B molar ratio may be 11 or more.

A deactivation rate of the two-dimensional nickel silicate molecular sieve catalyst having such composition and framework characteristics for methane and carbon dioxide in DRM at 700 °C may be less than 5%.

Hereinafter, examples of the present invention will be described in detail. However, the following examples are merely preferred examples of the present invention, and the present invention is not limited to the following examples.

<Examples>

**1. Materials**

Hexamethyleneimine (99%) and sodium hydroxide (99%) used in synthesis of a B-MWW precursor were purchased from Sigma-Aldrich (USA), and boric acid (99.5%) was purchased from Junsei Chemical (Japan), and fumed silica was purchased from Evonik (Japan). As a nickel precursor, nickel(II) nitrate hexahydrate ($Ni(NO_3)_2 \cdot 6H_2O$) (98%) was purchased from Samchun Chemicals (South Korea).

**2. Preparation of nickel silicate catalyst for dry reforming of methane**

(1) Preparation of Examples 1 to 9

: Ni-delaminated MWW layer (Ni-DML)-X-Y-Z catalyst

a) Preparation of B-MWW precursor [B-MWW(P)]

Hexamethyleneimine and sodium hydroxide were dissolved in deionized water, and then boric acid was added at 50 °C. After the boric acid was completely decomposed, fumed silica was slowly added, and the solution was homogenized.

The homogenized final solution was poured into a Teflon-lined stainless steel autoclave and heated at 175 °C for 7 days while stirring at 100 rpm.

After heating, a white solid was recovered by filtration with distilled water and then dried at room temperature to prepare a B-MWW precursor [B-MWW(P)].

b) Preparation of Ni-delaminated MWW layers (Ni-DML)

The prepared B-MWW(P) was added to a 0.25 to 1 M aqueous nickel (II) nitrate hexahydrate solution at 0.02 g/mL and mixed. The mixed solution was poured into a hydrothermal synthesis device (Teflon-lined stainless autoclave commercially available from PARR Instrument Company) and heated to 100 to 160 °C for 1 to 4 days while stirring at 0 to 100 rpm.

After heating, the solution was washed with deionized water, filtered, and dried at room temperature and then calcined at 550 °C for 8 hours.

Accordingly, Ni-DML-X-Y-Z was prepared, where X, Y, and Z refer to a hydrothermal synthesis temperature, a hydrothermal treatment time, and a molar concentration of nickel nitrate, respectively, and Examples 1 to 9 were prepared according to the X, Y, and Z.

(2) Preparation of Comparative Example 1: Ni/$\gamma$-Al$_2$O$_3$

Using $\gamma$-Al$_2$O$_3$ as a support and nickel(II) nitrate hexahydrate as a precursor of an active metal, Ni/$\gamma$-Al$_2$O$_3$ impregnated with 5 wt% nickel was prepared using incipient wetness impregnation. The synthesized Ni/$\gamma$-Al$_2$O$_3$ was dried at 100 °C overnight and calcined at 550 °C for 3 hours.

(3) Preparation of Comparative Example 2: Ni/B-MWW

The same method used for preparing Ni/$\gamma$-Al$_2$O$_3$ was applied, except that a B-MWW precursor was used as a support to prepare Ni/B-MWW.

(4) Control Group: B-MWW

The B-MWW precursor prepared in the example described above was used as a control group.

Table 1 below shows nickel silicate catalysts for dry reforming of methane, prepared by each of the above-described methods.

[Table 1]

| Catalyst | | Hydrothermal synthesis | | | | Impregnation | |
|---|---|---|---|---|---|---|---|
| | | precursor | Temperature (°C) | Time (days) | Concentration (M) | Support | Concentration (wt%) |
| Example 1 | Ni-DML-100-4-1 | B-MWW (P) | 100 | 4 | 1 | - | - |
| Example 2 | Ni-DML-120-4-1 | B-MWW (P) | 120 | 4 | 1 | - | - |
| Example 3 | Ni-DML-140-4-1 | B-MWW (P) | 140 | 4 | 1 | - | - |
| Example 4 | Ni-DML-160-4-1 | B-MWW (P) | 160 | 4 | 1 | - | - |
| Example 5 | Ni-DML-160-1-1 | B-MWW (P) | 160 | 1 | 1 | - | - |
| Example 6 | Ni-DML-160-2-1 | B-MWW (P) | 160 | 2 | 1 | - | - |
| Example 7 | Ni-DML-160-3-1 | B-MWW (P) | 160 | 3 | 1 | - | - |
| Example 8 | Ni-DML-160-4-0.25 | B-MWW (P) | 160 | 4 | 0.25 | - | - |
| Example 9 | Ni-DML-160-4-0.5 | B-MWW (P) | 160 | 4 | 0.5 | - | - |

(continued)

| Catalyst | | Hydrothermal synthesis | | | | Impregnation | |
|---|---|---|---|---|---|---|---|
| | | precursor | Temperature (°C) | Time (days) | Concentration (M) | Support | Concentration (wt%) |
| Comparative Example 1 | Ni/γ-Al$_2$O$_3$ | - | - | - | - | γ-Al$_2$O$_3$ | 5 |
| Comparative Example 2 | Ni/B-MWW | - | - | - | - | B-MWW | 5 |

### 3. Analysis of catalyst properties

(1) ICP analysis

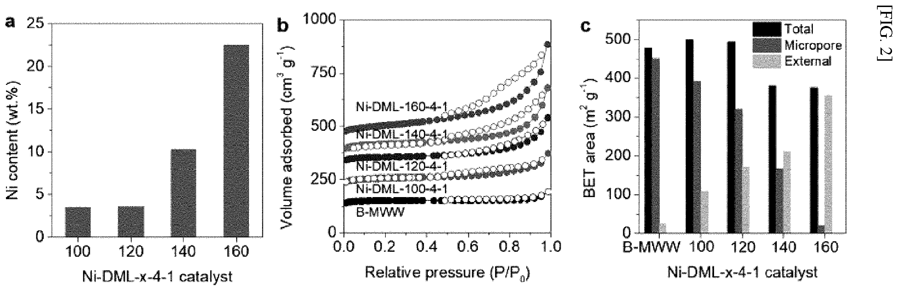

FIG. 2A is a graph of nitrogen content measured by analyzing the composition of Examples 1 to 4 (Ni-DMI,-X-4-1) using ICP elemental analysis, and based on the elemental analysis, Table 2 below shows calculated values of the framework compositions of Examples 1 to 4 assuming 72 T-atoms in an MWW unit cell. The framework composition is based on a molar ratio. The symbol "□" indicates a defect site.

[Table 2]

| Catalyst | | Framework composition[b] | Si/B | Si/Ni$_{Total}$ | Si/Ni$_{Framework}$ | Ni$_{Cluster}$/Ni$_{Framework}$ |
|---|---|---|---|---|---|---|
| Control Group | B-MWW | B$_{6.8}$Si$_{65.2}$O$_{144}$ | 9.5 | - | | |
| Example 1 | Ni-DML-100-4-1 | Ni$_{2.7}$B$_{3.4}$□$_{0.7}$Si$_{65.2}$O$_{144}$ | 19.0 | 24.0 | 24.0 | 0 |
| Example 2 | Ni-DML-120-4-1 | Ni$_{3.7}$B$_{3.1}$□$_{1.6}$Si$_{65.2}$O$_{144}$ | 20.7 | 10.6 | 17.7 | 0.7 |
| Example 3 | Ni-DML-140-4-1 | Ni$_{4.2}$B$_{2.6}$Si$_{65.2}$O$_{144}$ | 24.5 | 7.0 | 15.6 | 1.2 |
| Example 4 | Ni-DML-160-4-1 | Ni$_{6.3}$B$_{0.5}$Si$_{65.2}$O$_{144}$ | 117.0 | 4.0 | 10.4 | 1.6 |

In FIG. 2A and Table 2, the Ni content of Examples 1 to 4 (Ni-DML-X-4-1) was increased in proportion to an increase in hydrothermal synthesis temperature during catalyst preparation.

During preparation of Examples 1 to 4 (Ni-DML-X-4-1), when interlayer delamination and a nickel substitution mechanism were carried out in one-step, at a relatively low temperature of 100 °C or 120 °C, some nickel atoms took up the framework space, where boron atoms were removed, but some of the framework space, where boron atoms were removed, remained as defect sites. On the other hand, at a relatively high temperature of 140 °C or 160 °C, one or more nickel atoms may be present in an additional framework per substituted nickel atom in the framework.

Accordingly, the catalyst of Example 4 (Ni-DML-160-4-1) included the largest number of nickel atoms in the framework, whose Si/Ni$_{Framework}$ ratio was 10.4.

(2) Analysis of N$_2$ adsorption isotherm

FIG. 2B illustrates a graph of N$_2$ adsorption isotherms according to a hydrothermal treatment temperature when the catalysts of Examples 1 to 4 (Ni-DMI,-X-4-1) were prepared, and as the hydrothermal treatment temperature increases, properties changed from a Type I microporous structure to a Type IV mesoporous structure. The results show that a three-dimensional B-MWW precursor was successfully transformed into a two-dimensional layered structure.

In addition, the hysteresis in the adsorption-desorption isotherm of Example 4 (Ni-DMI,-160-4-1) shown in FIG. 2B is a typical characteristic of a parallel platelike pore, indicating a characteristic of a delaminated substance.

(3) BET analysis

FIG. 2C illustrates results of BET analysis of the catalysts of Examples 1 to 4 (Ni-DMI,-X-4-1), and it can be seen that an external surface area of Ni-DML was increased as the delamination of the B-MWW(P) was performed at a higher hydrothermal temperature.

**4. Analysis of catalyst for dry reforming of methane (DRM)**

An experiment was performed on a catalyst for dry reforming of methane (DRM) using a continuous flow device with a fixed-bed microreactor under atmospheric pressure, and the product was analyzed using a gas chromatograph (GC) equipped with a thermal conductivity detector (TCD). Before the experiment, the catalyst was activated under a flow of pure $H_2$ (50 mL/min) at 700 °C for 3 hours and purged with $N_2$ (60 mL/min) for 0.5 hours at the same temperature. (However, if necessary, the reaction proceeded without $H_2$ pretreatment.)

DRM catalytic activity was measured by supplying a feed gas stream composed of 40 vol% $CH_4$ and 40 vol% $CO_2$ (balanced with $N_2$) at a gas hourly space velocity (GHSV) of 30,000 mL/$g_{cat}$h (supplying a feed gas stream composed of $CH_4$, $CO_2$, and $N_2$ at a rate of 20, 20, and 10 mL/min, respectively) to a reactor containing 0.1 g of the catalyst activated by the above process. An inert gas, $N_2$, was used as an internal standard for GC-TCD analysis, and concentration changes due to an increase in gas volume after DRM were conducted.

In addition, a $CH_4$ conversion, $CO_2$ conversion, and $H_2/CO$ ratio were calculated using the following equations.

$$CH_4 \text{ conversion } (\%) = \{(CH_4)in - (CH_4)out\}/(CH_4)in \times 100$$

$$CO_2 \text{ conversion } (\%) = \{(CO_2)in - (CO_2)out\}/(CO_2)in \times 100$$

$$H_2/CO \text{ ratio} = [(H_2)out/2(CH_4)in]/[(CO)out/\{(CH_4)in + (CO_2)in\}]$$

$$\text{Deactivation rate} = (10 \text{ min conversion} - 12 \text{ h conversion})/10 \text{ min conversion} \times 100$$

(1) Catalytic activity according to reaction temperature

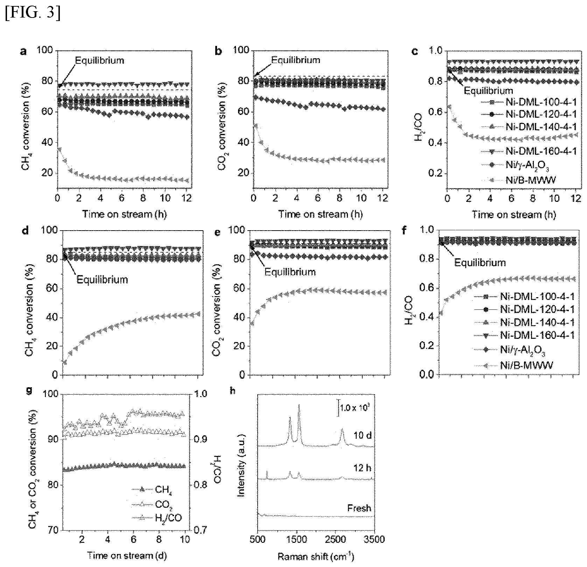

FIG. 3 illustrates the catalytic activity of Examples 1 to 4 (Ni-DML-X-4-1) and Comparative Example 1 (Ni/$\gamma$-$Al_2O_3$) and Comparative Example 2 (Ni/B-MWW) according to a measured DRM temperature and a usage time, and the results are summarized in Table 3 below.

FIGS. 3A to C illustrate the $CH_4$ conversion, $CO_2$ conversion, and $H_2/CO$ ratios of Examples 1 to 4 (Ni-DMI,-X-4-1) and Comparative Example 1 (Ni/$\gamma$-$Al_2O_3$) and Comparative Example 2 (Ni/B-MWW) measured in DRM at 700 °C, and through FIGS. 3A and B and Table 3, it can be seen that Examples 1 to 4 (Ni-DMI,-X-4-1), which have similar amounts of nickel compared to Comparative Example 1 (Ni/$\gamma$-$Al_2O_3$) and Comparative Example 2 (Ni/B-MWW) showed higher and more stable $CH_4$ and $CO_2$ conversion at 700 °C. This is because catalyst deactivation due to coke deposition proceeded is much faster in Comparative Examples 1 and 2 compared to Examples 1 to 4.

In general, in DRM, coke is formed much faster at a low temperature due to an increase in Boudouard reaction ($2CO \leftrightarrow C + CO_2$).

The deactivation rate of $CO_2$ conversion of Examples 1 to 4 (Ni-DML-X-4-1) for 12 hours was 0 to 1% while the deactivation rate of $CO_2$ conversion of Comparative Example 1 (Ni/$\gamma$-$Al_2O_3$) and Comparative Example 2 (Ni/B-MWW) was 10% and 45%, respectively. This is because, in Examples 1 to 4 (Ni-DML-X-4-1), high activity and excellent stability may be maintained due to highly dispersed nickel sites on an external surface area.

In Examples 1 to 4, as a hydrothermal treatment temperature increased, the number of active nickel sites increased, and therefore, $CH_4$ and $CO_2$ conversion was increased.

In FIG. 3C, the $H_2/CO$ ratio of Example 1 (Ni-DMI,100-4-1) to Example 3 (Ni-DML-140-4-1) was about 0.89, which is close to a thermodynamic equilibrium value at the experimental temperature. On the other hand, the $CH_4$ conversion and $H_2/CO$ ratio of Example 4 (Ni-DML-160-4-1) were higher than the thermodynamic equilibrium value. This is because $H_2$ and molecular carbon were generated by catalytic methane cracking under high temperature DRM conditions.

FIGS. 3D to F illustrate the $CH_4$ conversion, $CO_2$ conversion, and $H_2/CO$ ratios of Examples 1 to 4 (Ni-DML-X-4-1) and Comparative Example 1 (Ni/γ-$Al_2O_3$) and Comparative Example 2 (Ni/B-MWW) measured in DRM at 750 °C, and the catalytic activity of Examples 1 to 4 was 8 to 18% higher than that of Examples 1 to 4 measured at 700 °C.

In FIGS. 3A to F, the $H_2/CO$ ratios of Comparative Example 1 (Ni/γ-$Al_2O_3$) and Comparative Example 2 (Ni/B-MWW) were lower than those of Examples 1 to 4 (Ni-DML-X-4-1), which may be explained by an effect of a reverse water gas shift (RWGS) in DRM. In other words, the RWGS reaction is a reaction in which and water react to produce $CO_2$ and hydrogen, and a lower $H_2/CO$ ratio indicates that the RWGS reaction occurs actively, which may be further supported by a relatively high $CO_2$ conversion compared to the $CH_4$ conversion.

FIGS. 3G and H illustrate the $CH_4$ and $CO_2$ conversion and Raman spectra of Example 3 (Ni-DML-140-4-1) for 10-day use (marked with * in Table 3), 12-hour use, and (unused) fresh use in DRM at 750 °C. It can be seen that the deactivation of the catalyst of Example 3 was not detected because Example 3 maintained remarkable catalytic stability and activity for 10 days, rather, the $CH_4$ and $CO_2$ conversion increased by 1% or 2% (FIG. 3G) during time on stream (TOS). This is because endothermic side reactions such as methane cracking or the RWGS reaction occur at a high temperature, and an effect of the methane cracking became more pronounced at high temperatures, and as a result, the $H_2/CO$ ratio gradually increased over time.

The Raman spectra of FIG. 3H showed that, compared to the unused (fresh use) catalyst, when the catalyst of Example 3 was used for 12 hours and 10 hours in DRM, signals corresponding to disordered crystalline graphite and ordered crystalline graphite were detected, and it can be seen that coke was formed.

[Table 3]

| | Catalyst | Reaction Temperature (°C) | $CH_4$ conv. (%) | | $CO_2$ conv. (%) | | $H_2/CO$ | | Deactivation Rate (%) | | Coke (wt%) |
|---|---|---|---|---|---|---|---|---|---|---|---|
| | | | 10 mim | 12 h | 10 min | 12 h | 10 min | 12 h | $CH_4$ | $CO_2$ | |
| Example 1 | Ni-DML-100-4-1 | 700 | 65 | 64 | 77 | 76 | 0.87 | 0.86 | 2 | 1 | 3 |
| Example 2 | Ni-DML-120-4-1 | | 68 | 66 | 79 | 78 | 0.88 | 0.87 | 3 | 1 | 2 |
| Example 3 | Ni-DML-140-4-1 | | 70 | 69 | 80 | 80 | 0.88 | 0.88 | 1 | 0 | 1 |
| Example 4 | Ni-DML-160-4-1 | | 77 | 78 | 80 | 80 | 0.93 | 0.93 | - | 0 | 2 |
| Comparative Example 1 | Ni/γ-$Al_2O_3$ | | 65 | 57 | 69 | 62 | 0.82 | 0.80 | 12 | 10 | 3 |
| Comparative Example 2 | Ni/B-MWW | | 35 | 15 | 51 | 28 | 0.63 | 0.45 | 57 | 45 | - |
| Example 1 | Ni-DML-100-4-1 | 750 | 83 | 81 | 90 | 88 | 0.93 | 0.92 | 2 | 2 | 2 |
| Example 2 | Ni-DML-120-4-1 | | 81 | 80 | 90 | 90 | 0.91 | 0.91 | 1 | 0 | 1 |
| Example 3 | Ni-DML-140-4-1 | | 83 | 83 | 89 | 90 | 0.92 | 0.92 | 0 | - | 2 |
| Example 3* | Ni-DML-140-4-1 (10 days) | | 83 | 84 | 89 | 91 | 0.80 | 0.84 | - | - | 6 |
| Example 4 | Ni-DML-160-4-1 | | 87 | 87 | 92 | 93 | 0.94 | 0.94 | 0 | - | 2 |
| Comparative Example 1 | Ni/γ-$Al_2O_3$ | | 81 | 80 | 84 | 82 | 0.92 | 0.91 | 1 | 2 | 2 |
| Comparative Example 2 | Ni/B-MWW | | 9 | 43 | 36 | 57 | 0.43 | 0.66 | - | - | - |

(2) Catalytic activity according to hydrothermal treatment time and nickel precursor concentration

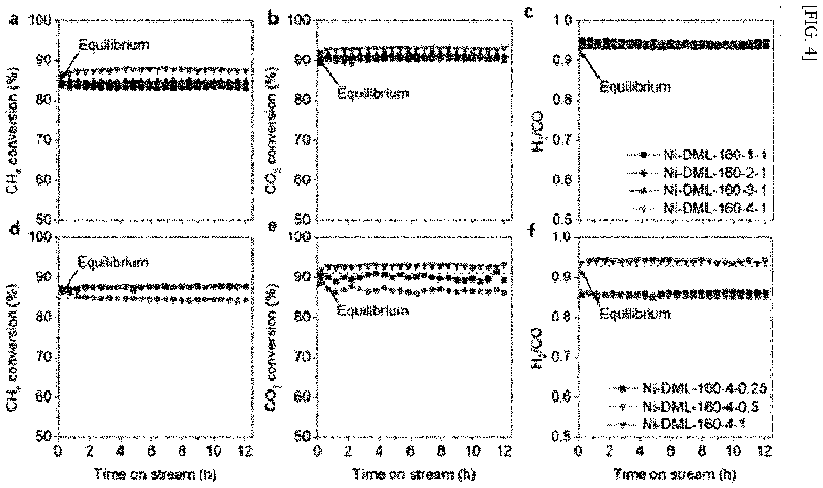

FIG. 4 and Table 4 below illustrate catalytic activity according to a hydrothermal treatment time and nickel precursor concentration.

FIG. 4A to C illustrate the $CH_4$ conversion, $CO_2$ conversion, and $H_2/CO$ ratios according to the hydrothermal treatment time of Examples 4 to 7 (Ni-DML-160-Y-1) measured in DRM at 750 °C,,respectively. It was found that the difference in catalytic activity according to hydrothermal treatment time was not significant.

Meanwhile, FIGS. 4D to F illustrate the $CH_4$ conversion, $CO_2$ conversion, and $H_2/CO$ ratios according to the nickel precursor concentration of Examples 4, 8 and 9 (Ni-DML-160-4-Z) measured in DRM at 750 °C, respectively, and it was found that catalytic activity was relatively low when the concentration of nickel precursor was low (0.25 to 0.5 M).

[Table 4]

| | Catalyst | Reaction Temperature (°C) | $CH_4$ conv. (%) | | $CO_2$ conv. (%) | | $H_2/CO$ | | Deactivation Rate (%) | | Coke (wt%) |
|---|---|---|---|---|---|---|---|---|---|---|---|
| | | | 10 min | 12 h | 10 min | 12 h | 10 min | 12 h | $CH_4$ | $CO_2$ | |
| Example 4 | Ni-DML-160-4-1 | 750 | 87 | 87 | 92 | 93 | 0.94 | 0.94 | 0 | - | 2 |
| Example 5 | Ni-DML-160-1-1 | | 84 | 83 | 90 | 90 | 0.95 | 0.95 | 1 | 0 | 2 |
| Example 6 | Ni-DML-160-2-1 | | 84 | 84 | 91 | 91 | 0.94 | 0.94 | 0 | 0 | 2 |
| Example 7 | Ni-DML-160-3-1 | | 84 | 85 | 91 | 91 | 0.93 | 0.94 | - | 0 | 2 |
| Example 8 | Ni-DML-160-4-0.25 | | 87 | 88 | 91 | 89 | 0.86 | 0.86 | - | 2 | 6 |
| Example 9 | Ni-DML-160-4-0.5 | | 87 | 84 | 86 | 86 | 0.86 | 0.85 | 3 | 0 | 4 |

**Claims**

1. A method of preparing a two-dimensional nickel silicate molecular sieve catalyst for dry reforming of methane (DRM), the method comprising:

    (a) synthesizing a layered borosilicate zeolite precursor having an MWW framework [B-MWW(P)]; and
    (b) adding a nickel precursor to the B-MWW(P) and performing hydrothermal treatment.

2. The method of claim 1, wherein step (a) includes synthesizing a B-MWW(P) having an Si/B molar ratio of 5.0 to 20.0.

3. The method of claim 1, wherein a concentration of the nickel precursor in step (b) is 0.1 to 5.0 M.

4. The method of claim 1, wherein a hydrothermal treatment temperature in step (b) is 100 to 200 °C.

5. A two-dimensional nickel silicate molecular sieve catalyst for dry reforming of methane (DRM), prepared by the method of any one of claims 1 to 4.

6. The two-dimensional nickel silicate molecular sieve catalyst of claim 5, wherein an Si/Ni molar ratio of the catalyst is 1.5 to 30.

7. The two-dimensional nickel silicate molecular sieve catalyst of claim 5, wherein the catalyst has a catalyst deactivation rate of less than 5% for methane and carbon dioxide in DRM at 700 °C.

[FIG. 1]

[FIG. 2]

[FIG. 3]

[FIG. 4]

## INTERNATIONAL SEARCH REPORT

| | International application No. |
|---|---|
| | **PCT/KR2021/009424** |

**A. CLASSIFICATION OF SUBJECT MATTER**

**B01J 37/10**(2006.01)i; **B01J 35/10**(2006.01)i; **B01J 29/76**(2006.01)i; **C01B 3/40**(2006.01)i

According to International Patent Classification (IPC) or to both national classification and IPC

**B. FIELDS SEARCHED**

Minimum documentation searched (classification system followed by classification symbols)

B01J 37/10(2006.01); B01J 21/08(2006.01); B01J 23/74(2006.01); B01J 23/755(2006.01); B01J 37/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 메탄 건식 개질 반응용 촉매(catalyst for dry reforming of methane), 보로실리케이트(borosilicate), MWW 골격형(MWW skeletal type), 니켈 전구체(nickel precursor), 수열처리(hydrothermal)

**C. DOCUMENTS CONSIDERED TO BE RELEVANT**

| Category* | Citation of document, with indication, where appropriate, of the relevant passages | Relevant to claim No. |
|---|---|---|
| Y | OUYANG, Xiaoying et al. Single-step delamination of a MWW borosilicate layered zeolite precursor under mild conditions without surfactant and sonication. Journal of the American Chemical Society. 2014, vol. 136, pp. 1449-1461.<br>See abstract; pages 1450 and 1454; experimental section; table 2; and figure 1. | 1-7 |
| Y | KR 10-2010-0011687 A (HYUNDAI STEEL COMPANY) 03 February 2010 (2010-02-03)<br>See paragraphs [0022], [0048] and [0049]; and claim 1. | 1-7 |
| A | KR 10-2014-0110660 A (RESEARCH & BUSINESS FOUNDATION SUNGKYUNKWAN UNIVERSITY) 17 September 2014 (2014-09-17)<br>See entire document. | 1-7 |
| A | KR 10-1995-0024803 A (KOREA RESEARCH INSTITUTE OF CHEMICAL TECHNOLOGY) 15 September 1995 (1995-09-15)<br>See entire document. | 1-7 |

☑ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 February 2022** | **25 February 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

International application No.

**PCT/KR2021/009424**

**C.    DOCUMENTS CONSIDERED TO BE RELEVANT**

| Category* | Citation of document, with indication, where appropriate, of the relevant passages | Relevant to claim No. |
|---|---|---|
| A | LIU, Guanqi et al. Hydrothermal synthesis of MWW-type stannosilicate and its post-structural transformation to MCM-56 analogue. Microporous and Mesoporous Materials. 2011, vol. 165, pp. 210-218. <br> See entire document. | 1-7 |

Form PCT/ISA/210 (second sheet) (July 2019)

**INTERNATIONAL SEARCH REPORT**
Information on patent family members

International application No.

**PCT/KR2021/009424**

| Patent document cited in search report | | | Publication date (day/month/year) | Patent family member(s) | | | Publication date (day/month/year) |
|---|---|---|---|---|---|---|---|
| KR | 10-2010-0011687 | A | 03 February 2010 | KR | 10-0963778 | B1 | 14 June 2010 |
| KR | 10-2014-0110660 | A | 17 September 2014 | KR | 10-1466470 | B1 | 02 December 2014 |
| | | | | KR | 10-1466541 | B1 | 01 December 2014 |
| | | | | KR | 10-2014-0111229 | A | 18 September 2014 |
| KR | 10-1995-0024803 | A | 15 September 1995 | JP | 07-275711 | A | 24 October 1995 |
| | | | | JP | 2914206 | B2 | 28 June 1999 |
| | | | | KR | 10-0132012 | B1 | 08 April 1998 |
| | | | | KR | 10-1995-0005964 | A | 20 March 1995 |
| | | | | KR | 10-1996-0009892 | B1 | 24 July 1996 |
| | | | | US | 5855815 | A | 05 January 1999 |
| | | | | US | 6242380 | B1 | 05 June 2001 |

Form PCT/ISA/210 (patent family annex) (July 2019)

**REFERENCES CITED IN THE DESCRIPTION**

**Patent documents cited in the description**

- KR 101959379
- KR 101487387